# EUROPEAN PATENT APPLICATION

(11) **EP 4 835 630 A2**
(43) Date of publication of application: **04.11.2026**
(21) Application number: 26205428.1
(22) Date of filing: 09.11.2022
(51) Int. Cl.: G06F 3/048

(54) **CONTEXT AWARE OBJECT RECOGNITION FOR IOT CONTROL**

(30) Priority: 10.11.2021 US 202163277870 P
(62) Document number(s) of the earlier application(s) in accordance with Art. 76 EPC: 22826856.1 / 4 430 582
(71) Applicant: InterDigital Madison Patent Holdings, 75017 Paris (FR)
(72) Inventor: RUMREICH, Mark, Indianapolis, 46226 (US); HORLANDER, Thomas, Indianapolis, 46226 (US)
(74) Representative: Interdigital

(57) **Abstract**

A method and device for IoT control of objects in an environmental space includes capturing an image of one or more objects in the environmental space using a camera. The captured image is normalized for up/down orientation of the camera and one or more objects in the image are identified. At least one contextual attribute for the one or more objects is determined based on the captured image. A user control application for a network-connected object is accessed based on the determined at least one contextual attribute for the one or more objects.

## Description

### CROSS-REFERENCE TO RELATED APPLICATION

The present application claims the benefit of US Provisional Patent Application No. 63/277,870 filed November 10, 2021which is incorporated herein by reference.

### TECHNICAL FIELD

The present disclosure generally relates to Internet of Things (IoT) applications. At least one embodiment relates to the use of context aware object recognition for IoT control of objects in an environmental space.

### BACKGROUND

As more devices in an environmental space become connected (e.g., via a network or the Internet), methods to efficiently control those devices through a unified interface on an Internet of Things (IoT) control device have become more important. Some environmental spaces such as, for example, a home or office may have many IoT devices each having an individual user application.

For a user who wants to control such devices, it is time consuming to find the relevant user application icon and then access the user application every time such user wants to control one of the many IoT devices. The embodiments herein have been devised with the foregoing in mind.

### SUMMARY

The disclosure is directed to a method for context aware object recognition for IoT control of objects in an environmental space. The method may take into account implementations on devices, such as, for example, mobile phones, tablets, head mounted displays (HMDs) and digital televisions.

According to an embodiment, a method, implemented in a wireless transmit/receive unit (WTRU), may comprise capturing an image comprising one or more objects using one or more cameras; converting the captured image into a standard format; identifying the one or more objects in the converted image; determining at least one contextual attribute for the one or more identified objects based on the converted image; and accessing one or more application based on the at least one determined contextual attribute for the one or more identified objects. The method may further comprise proposing (e.g., displaying) to a user interface the accessed one or more application. The one or more applications may be one or more user control applications for a network-connected object.

Converting the captured image into a standard format may comprise normalizing the captured image for up/down orientation of the one or more cameras. Normalizing the captured image for up/down orientation may comprise performing up/down off-axis normalization of the captured image.

According to an embodiment, a wireless transmit/receive unit (WTRU) comprising a processor, a transceiver unit and a storage unit, and may be configured to: capture an image comprising one or more objects using one or more cameras; convert the captured image into a standard format; identify the one or more objects in the converted image; determine at least one contextual attribute for the one or more identified objects based on the converted image; and access one or more application based on the at least one determined contextual attribute for the one or more identified objects. The WTRU may be further configured to propose (e.g., to display) to a user interface the accessed one or more user control application. The one or more applications may be one or more user control applications for a network-connected object.

Converting the captured image into a standard format may comprise normalizing the captured image for up/down orientation of the one or more cameras. Normalizing the captured image for up/down orientation may comprise performing up/down off-axis normalization of the captured image.

According to an embodiment, a method may include capturing an image comprising one or more objects using a camera and normalizing the captured image for up/down orientation of the camera. The one or more objects may be located in an environmental space. One or more objects in the image may be identified and at least one contextual attribute for the one or more objects may be determined based on the captured image. An application may be accessed based on the determined at least one contextual attribute for the one or more objects. The application may be a user control application for a network-connected object.

The method may include determining at least one contextual attribute for one or more objects, wherein the one or more objects may be located in an environmental space and accessing an application based on the determined at least one contextual attribute for the one or more objects. In an embodiment, the environmental space may be one of a home and an office. The application may be a user control application for a network-connected object.

In an embodiment, the at least one determined contextual attribute may be any one of compass orientation of the one or more identified objects, visual characteristics of the one or more identified objects, visual characteristics of a wall or a floor, proximity of the one or more identified objects to other objects and internet addresses and signal strengths of access points.

In an embodiment, the one or more identified objects may be compared to a library of object images and contextual attributes. In an embodiment, the one or more identified objects may be categorized based on the comparison to the library of object images and contextual attributes as one of a network-connected object associated with a user control application and a network-connected object not associated with a user control application.

In an embodiment, when the categorized identified object is the network-connected object associated with the user control application, the method may include identifying the categorized identified object on a screen of the display as associated with the user control application and enabling touch activation on the screen for the user control application of the categorized identified object.

In an embodiment, when the categorized identified object is the network-connected object not associated with the user control application, the method may include identifying the categorized identified object on a screen of the display as not associated with the user control application and enabling touch activation on the screen of an unregistered user control application for controlling the categorized identified object.

In an embodiment, the one or more identified objects may be categorized based on the comparison to the library of object images and contextual attributes as a network-connected object associated with a do not display directive.

In an embodiment, when the categorized identified object is the network-connected object associated with the do not display directive, the method may include identifying the categorized identified object on the screen of the display as associated with the do not display directive and enabling touch activation on the screen of a user control application for the do not display directive.

According to an embodiment, a device may include a camera and at least one processor. The camera may be used for capturing an image comprising one or more objects, wherein the one or more objects may be located in an environmental space. The processor may be configured to normalize the captured image for up/down orientation of the camera, identify the one or more objects in the image, determine at least one contextual attribute for the one or more identified objects based on the captured image and access an application based on the at least one determined contextual attribute for the one or more identified objects. The application may be a user control application for a network -controlled object.

In an embodiment, the device may further comprise at least one of network connectivity, a display with a screen, an accelerometer and a magnetometer.

In an embodiment, the at least one determined contextual attribute may be any one of compass orientation of the one or more identified objects, visual characteristics of the one or more identified objects, visual characteristics of a wall or a floor, proximity of the one or more identified objects to other objects and internet addresses and signal strengths of access points.

In an embodiment, the at least one processor may be further configured to compare the one or more identified objects to a library of object images and contextual attributes.

In an embodiment, the at least one processor may be further configured to categorize the one or more identified objects based on the comparison as one of a network-connected object associated with a user control application and a network-connected object not associated with a user control application.

In an embodiment, when the categorized identified object is the network-connected object associated with the user control application, the at least one processor may be further configured to: identify the categorized identified object on the screen of the display as associated with the user control application and enable touch activation on the screen of the user control application for the categorized identified object.

In an embodiment, when the categorized identified object is the network-connected object not associated with the user control application, the at least one processor may be further configured to: identify the categorized identified object on the screen of the display as not associated with a user control application and enable touch activation on the screen of the display of an unregistered user control application for controlling said categorized identified object.

In an embodiment, the at least one processor may be further configured to categorize the one or more identified objects based on the comparison as a network-connected object associated with a do not display directive.

In an embodiment, when the categorized identified object is the network-connected object associated with the do not display directive, the at least one processor may be further configured to: identify the categorized identified object on the screen of the display as associated with the do not display directive and enable touch activation on the screen of a do not display user control application.

Some processes implemented by elements of the disclosure may be computer implemented. Accordingly, such elements may take the form of an entirely hardware embodiment, an entirely software embodiment (including firmware, resident software, microcode, etc.) or an embodiment combining software and hardware aspects that may all generally be referred to herein as "circuit", "module" or "system". Furthermore, such elements may take the form of a computer program product embodied in any tangible medium of expression having computer usable code embodied in the medium.

Since elements of the disclosure can be implemented in software, the present disclosure can be embodied as computer readable code for provision to a programmable apparatus on any suitable carrier medium. A tangible carrier medium may comprise a storage medium such as a floppy disk, a CD-ROM, a hard disk drive, a magnetic tape device or a solid-state memory device and the like. A transient carrier medium may include a signal such as an electrical signal, an optical signal, an acoustic signal, a magnetic signal or an electromagnetic signal, e.g., microwave or RF signal.

### BRIEF DESCRIPTION OF THE DRAWINGS

Other features and advantages of embodiments shall appear from the following description, given by way of indicative and non-exhaustive examples and from the appended drawings, of which:
FIG. 1 illustrates an exemplary apparatus for context aware object recognition for IoT control of objects in an environmental space according to an embodiment of the disclosure;
FIG. 2 is a flowchart of a particular embodiment of a proposed method for context aware object recognition for IoT control of objects in an environmental space;
FIG. 3 is an illustration showing an image of one or more objects in an environmental space captured using a camera of the exemplary apparatus shown in FIG. 1;
FIG. 4A is an illustration showing an image of one or more objects in an environmental space captured using a camera;
FIG. 4B is an illustration showing an image of the one or more objects in an environmental space shown in FIG. 4A after performing up/down normalization using an accelerometer (gravity sensor);
FIG. 5A is an illustration showing an image of one or more objects in an environmental space captured using a camera;
FIG. 5B is an illustration showing an image of the one or more objects in an environmental space shown in FIG 5A after performing up/down off-axis normalization using a geometric transform;
FIG. 6 is a flowchart of another exemplary embodiment of a proposed method for context aware object recognition for IoT control of objects in an environmental space;
FIG. 7A is an illustration showing a captured image of a television that is in operation;
FIG. 7B is an illustration showing a television library model that has an excluded active picture area;
FIG. 8 is an illustration of the implementation of the proposed method of FIG. 6 for context aware object recognition for IoT control of an object in an environmental space;
FIG. 9 is a flowchart of another exemplary embodiment of a proposed method for context aware object recognition for IoT control of objects in an environmental space;
FIG. 10 is an illustration of the implementation of the proposed method of FIG. 9 for context aware object recognition for IoT control of an object in an environmental space; and
FIG. 11 is a flowchart of another exemplary embodiment of a proposed method for context aware object recognition for IoT control of objects in an environmental space.
FIG. 12 is a flowchart of another exemplary embodiment of a proposed method for context aware object recognition for IoT control of objects in an environmental space.

### DETAILED DESCRIPTION

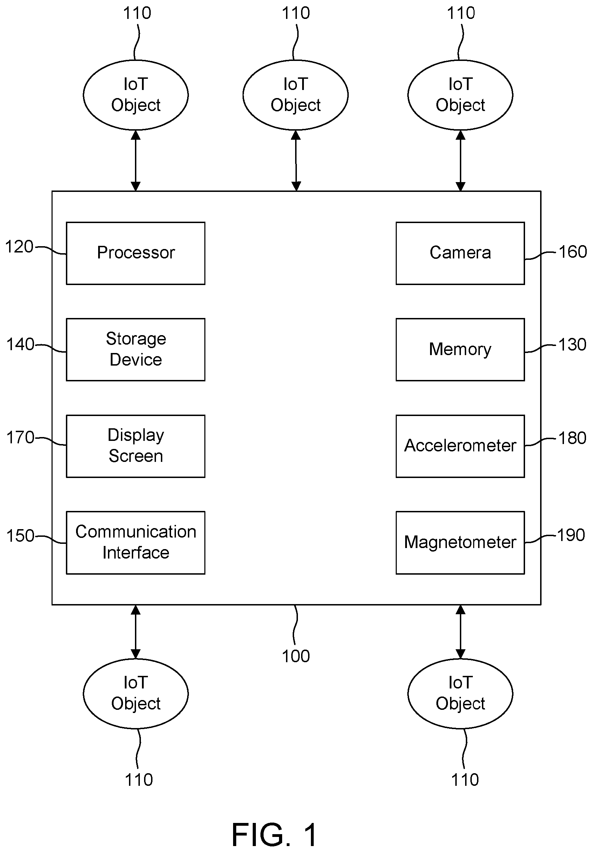

FIG. 1 illustrates an exemplary apparatus for context aware object recognition for IoT control of objects in an environmental space according to an embodiment of the disclosure. FIG. 1 illustrates a block diagram of an exemplary apparatus 100 in which various aspects of the exemplary embodiments may be implemented. The apparatus 100 may be a device including the various components described below and is configured to perform corresponding processes. Examples, of such devices include, but are not limited to, mobile devices, smart phones and tablet computers. The apparatus 100 may be communicatively coupled to one or multiple IoT objects 110 in an environmental space via a communication channel.

Various embodiments of the apparatus 100 include at least one processor 120 configured to execute instructions loaded therein for implementing the various processes as discussed below. The processor 120 may include embedded memory, an input/output interface, and various other circuitries generally known in the art. The apparatus 100 may also include at least one memory 130 (e.g., a volatile memory device, a non-volatile memory device). The apparatus 100 may additionally include a storage device 140, which may include non-volatile memory, including, but not limited to EEPROM, ROM, PROM, RAM, DRAM, SRAM, flash, magnetic disk drive, and/or optical disk drive. The storage device 140 may comprise an internal storage device, an attached storage device, and/or a network accessible storage device, as non-limiting examples.

Program code to be loaded onto one or more processors 120 to perform the various processes, described hereinbelow, may be stored in the storage device 140 and subsequently loaded into the memory 130 for execution by the processors 120. In accordance with exemplary embodiments, one or more of the processors 120, the memory 130 and the storage device 140, may store one or more of the various items during the performance of the processes discussed herein below, including, but not limited to captured input images and video, variables, operations and operational logic.

The apparatus 100 may also include a communication interface 150, that enables communication with the IoT objects 110, via a communication channel. The communication interface 150 may include, but is not limited to, a transceiver configured to transmit and receive data from the communication channel. The communication interface 150 may include, but is not limited to, a modem or network card and the communication interface may be implemented within a wired and/or wireless medium (e.g., Wi-Fi and Bluetooth connectivity). The various components of the communication interface 150 may be connected or communicatively coupled together (not shown) using various suitable connections, including but not limited to, internal buses, wires, and printed circuit boards.

The communication interface 150 may also be communicatively connected via the communication channel with cloud services for performance of the various processes described hereinbelow. Additionally, communication interface 150 may also be communicatively connected via the communication channel with cloud services for storage of one or more of the various items during the performance of the processes discussed herein below, including, but not limited to captured input images and video, library images and variables, operations and operational logic.

The apparatus many also include a camera 160 and/or a display screen 170. Both the camera 160 and the display screen 170 are coupled to the processor 120. The camera 160 is used, for example, to capture images and/or video of the IoT objects 110 in the environmental space. The display screen 170 is used to display the images and/or video of the IoT objects 110 captured by the camera 160, as well as to interact and provide input to the apparatus 100. The display screen 170 may be a touch screen to enable performance of the processes discussed herein below.

The apparatus 100 also includes an accelerometer 180 and a magnetometer 190 coupled to the processor 120.

The exemplary embodiments may be carried out by computer software implemented by the processor 120, or by hardware, or by a combination of hardware and software. As a non-limiting example, the exemplary embodiments may be implemented by one or more integrated circuits. The memory 130 may be of any type appropriate to the technical environment and may be implemented using any appropriate data storage technology, such as optical memory devices, magnetic memory devices, semiconductor-based memory devices, fixed memory, and removable memory, as non-limiting examples. The processor 120 may be of any type appropriate to the technical environment, and may encompass one or more microprocessors, general purpose computers, special purpose computers, and processors based on a multi-core architecture, as non-limiting examples.

The implementations described herein may be implemented in, for example, a method or a process, an apparatus, a software program, data stream, or a signal. Even if only discussed in the context of a single form of implementation (for example, discussed only as a method) the implementation of features discussed may be implemented in other forms (for example, an apparatus or a program). A program may be implemented in, for example, appropriate hardware, software, and firmware. The methods may be implemented in, for example, an apparatus such as, for example, a computer, a microprocessor, an integrated circuit, or a programmable logic device. Processors also include communication devices, such as, for example, computers, cell phones, portable/personal digital assistants (PDAs), tablets, and other devices that facilitate user control applications.

The disclosure is applicable context aware recognition for Internet of Things (IoT) control of objects in an environmental space using devices, such as, for example, mobile phones, tablets and digital televisions. In one embodiment, a goal of the present disclosure is to simplify access to IoT control applications for a user who wants to control objects in an environmental space. Context aware object recognition allows simplification for the user to access the IoT control applications. In some exemplary embodiments, a mobile phone or a tablet is used as an IoT controller (apparatus 100), as described above with respect to FIG. 1.

The IoT controller (apparatus 100) includes Wi-Fi and Bluetooth connectivity, a touchscreen, a camera, an accelerometer (e.g., gravity sensor), and a magnetometer (e.g., compass). These capabilities and components work together for context aware IoT control. For example, in an exemplary embodiment, discussed in greater detail below, when the IoT control application is active, a portion of the IoT controller (apparatus 100) screen will include a view from the camera of objects in an environmental space.

In an embodiment. objects in the environmental space that the IoT controller (apparatus 100) can recognize, interact with and/or control, such as, for example, a television or a smart lamp, may be highlighted on the touchscreen or display. Touching an image of the highlighted object will activate controls for that object. For example, in the case of a smart lamp, a light dimming slider control may be displayed adjacent to the smart lamp on the touchscreen, without requiring a prerequisite activating touch.

In one exemplary embodiment, the simplified IoT control is based on context aware object recognition. This means that the IoT controller (apparatus 100) utilizes at least one contextual attribute to identify the IoT devices in the camera's field of view. Examples of contextual attributes, include, but is not limited to, compass orientation of an object, visual characteristics of the object, visual characteristics of a wall or a floor, proximity of the object to other objects and internet addresses and signal strengths of access points.

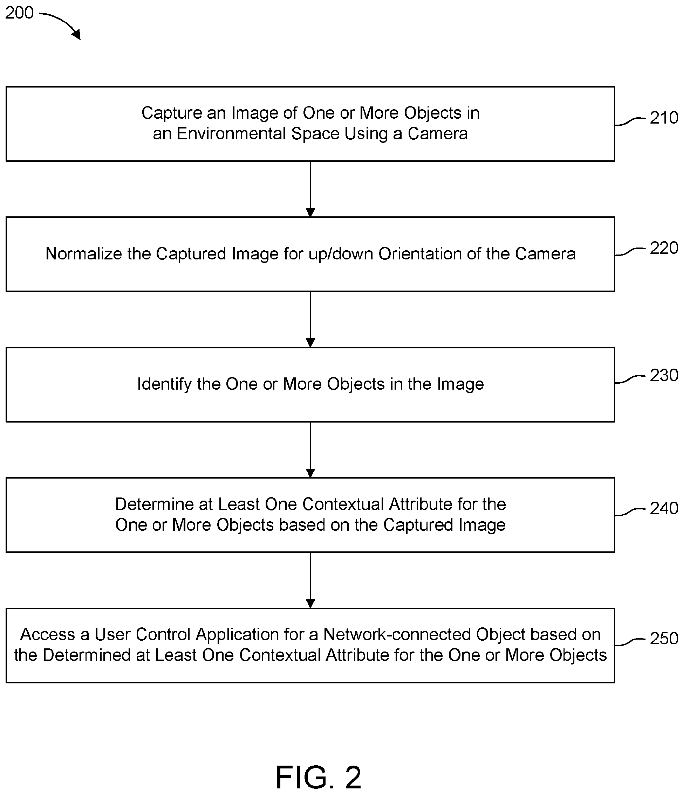

FIG. 2 is a flowchart 200 of a particular embodiment of a proposed method for context aware object recognition for IoT control of objects in an environmental space. In this particular embodiment, the method includes five steps 210 to 250.

In an exemplary implementation, described below, the method is carried out by the apparatus 100 (e.g., smartphone or tablet). In an alternative exemplary implementation, the method is carried out by a processor external to apparatus 100. In the latter case, the results from the processor are provided to apparatus 100.

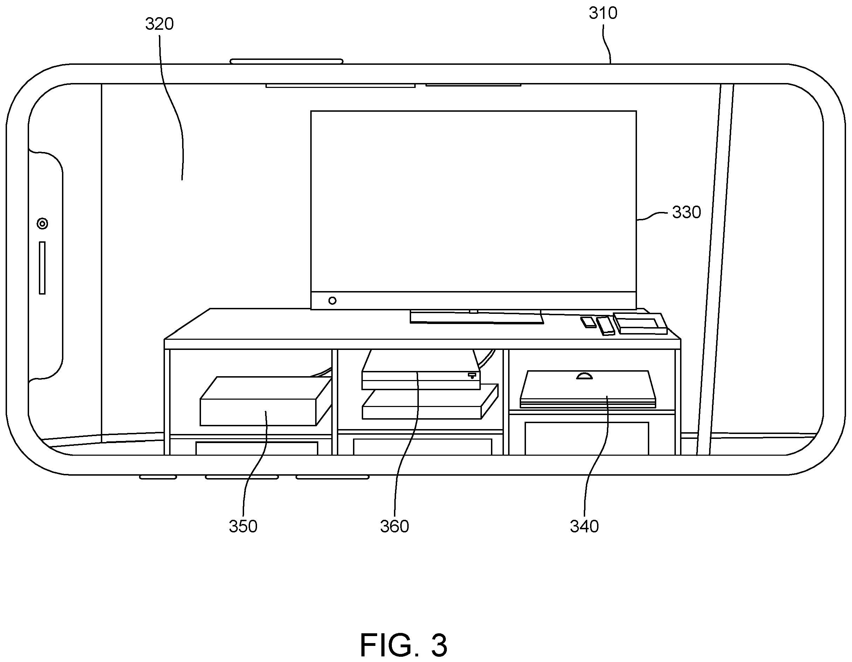

In step 210, when an IoT control application is active, an image of one or more objects in an environmental space is captured using a camera. Referring to FIG. 3 an exemplary apparatus 100 (see, e.g., FIG. 1) is depicted. In the exemplary embodiment of FIG. 3, a smartphone 310 is shown. On a touchscreen 320 of the smartphone 310, an image of one or more objects 330, 340, 350, 360 in an environmental space is displayed. In this exemplary embodiment, a television 330, a set-top-box 360, a DVR 340 and a home theater receiver 350 are shown. Other non-limiting examples of the one or more objects may include, for example, a digital music server or a network music player.

Referring to step 220 of FIG. 2, the captured image is normalized for up/down orientation of the camera. The image depicted in FIG. 3 is normalized for up/down orientation of the camera. Object recognition benefits from knowing which direction us up.

Normalization is the process of converting an image to a standard format to reduce the number of comparisons needed to correlate candidate objects against a library of object images. Rotating an image so "up is up" is one example. Resizing an image to provide a unit maximum dimension is another example.

Off-axis object images can be normalized to on-axis representations, but this involves the complexities of mathematically rotating the object model in space. One alternative is to not normalize for an off-axis view, and instead rely on a comparison with off-axis library images.

The accelerometer (gravity sensor) 180 of apparatus 100 allows up/down normalization of the camera image used for object recognition and may be one step in context aware object recognition. Up/down normalization may be independent of what the user may see on the touch screen of the apparatus 100.

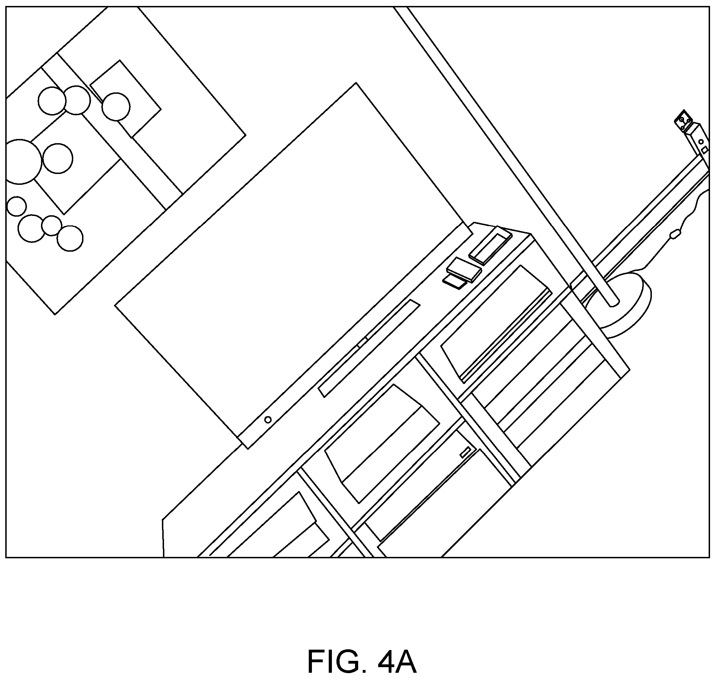

Up/down normalization may be performed by rotating the image in accordance with the accelerometer 180 (gravity sensor). FIG 4A is an illustration showing an image of one or more objects in an environmental space captured using a camera on the apparatus 100. The image shown in FIG. 4A illustrates that the one or more objects depicted therein do not have an up/down orientation.

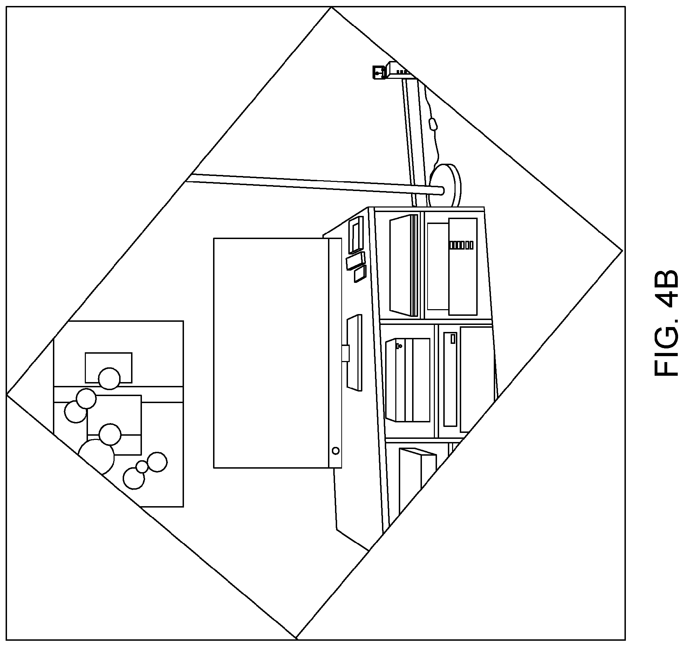

FIG. 4B shows an image of the one or more objects in an environmental space of FIG. 4A after performing up/down normalization using the accelerometer 180 (gravity sensor). The image of FIG. 4B shows the one or more objects depicted therein in an up/down orientation.

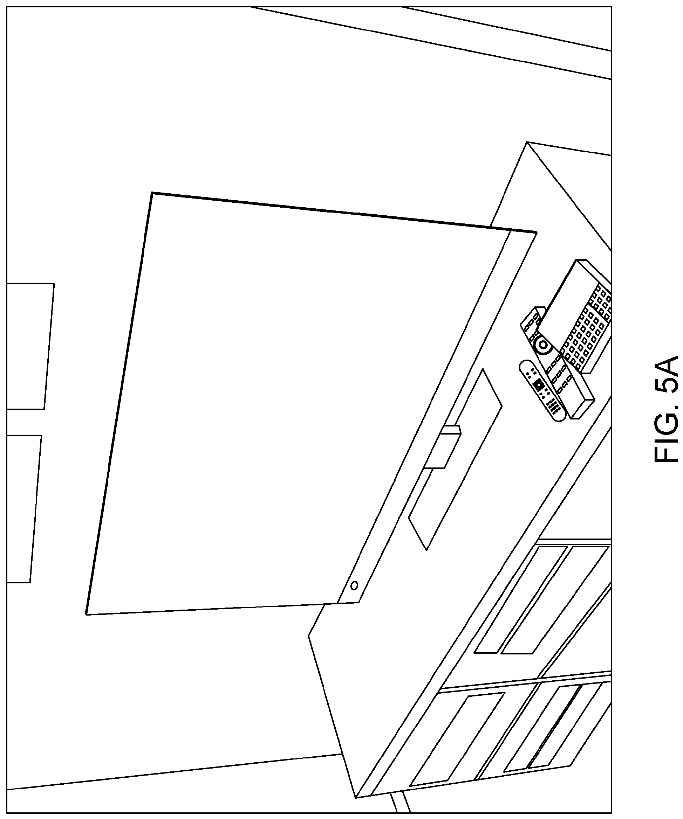

In one embodiment, off-axis images can be normalized to an on-axis representation. The image of FIG. 5A illustrates an example of one or more objects in an environmental space captured using a camera prior to performing up/down off-axis normalization using a geometric transform. Thus, in FIG. 5A the one or more objects depicted therein have an off-axis orientation.

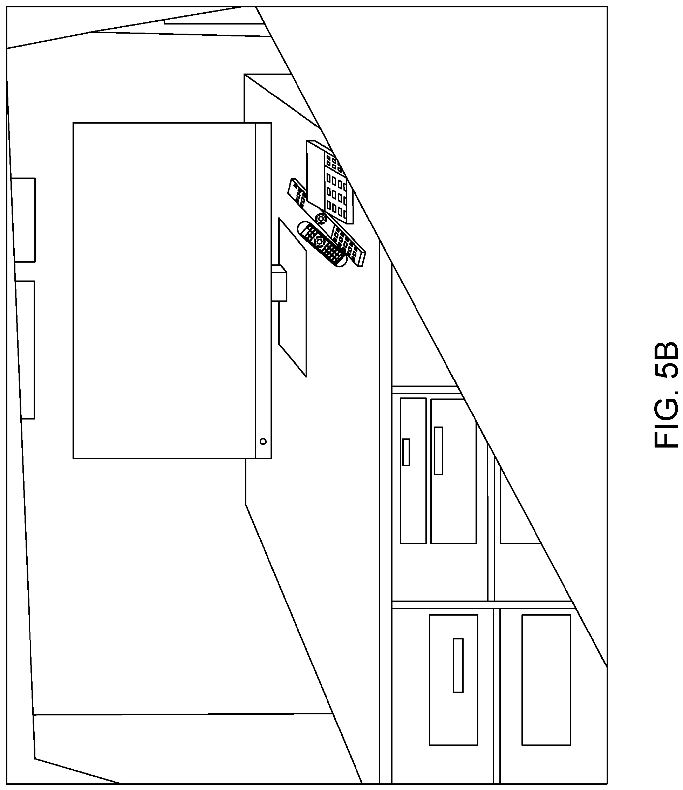

The image of FIG. 5B shows the one or more objects in an environmental space of FIG. 5A after performing up/down off-axis normalization using a geometric transform. As such, the image in FIG. 5B the one or more objects depicted therein have an up/down orientation.

Referring to step 230 of FIG. 2, in an embodiment, the one or more candidate objects are identified within the normalized image. Thereafter, at step 240, at least one contextual attribute is determined for each of the one or more candidate objects identified within the normalized image. Examples of contextual attributes, include, but are not limited to, compass orientation of an object, visual characteristics of an object, visual characteristics of a wall or a floor, proximity of the object to other objects and internet addresses and signal strengths of access points.

An environmental space may have multiple IoT devices of the same type, such as multiple televisions or multiple lamps with smart bulbs. The compass orientation of an object can be used to help identify such objects.

In an exemplary embodiment, an object recognition algorithm can be used to normalize the geometry of objects in the captured image to provide a pseudo-head-on view. For example, a rectangular television screen when viewed off-axis may appear as a trapezoid. The trapezoid can be normalized to a rectangle. The normalized view can then be compared with a library of television models for identification.

In addition, the normalization step can provide an estimate of the compass orientation of the object. For example, the magnitude and orientation of normalization required for an object might indicate that the captured image was 45 degrees off-axis horizontally. When such information is combined with the compass reading for the apparatus 100 (e.g., using the magnetometer 190), it might indicate that the compass orientation of such object is, for example, North.

Many objects are rectangular in appearance when viewed head-on, but some are not. However, because many objects have at least a straight bottom edge parallel to the ground, edge detection can be employed to assist object recognition. In a particular exemplary embodiment, a user may be asked to draw a shape around an object to assist in the object recognition step.

Although visual characteristics of objects helps in differentiating between objects, such differences that are relatively easy for a human to identify may not be as easy for a machine. For example, for a human, a television does not look like a lamp and vice versa. However, in practice, the appearance of objects changes based on ambient lighting as well as whether the object (e.g., TV or lamp) is off or on. Identification of a specific model of a television based on its stand or logo, or, differentiating between a digital set-top-box and a DVD player require more advanced object recognition techniques and may rely on a library of device models, for example.

The approximate size of an object can be determined from an image when the distance between the camera and the object are known. The distance can be measured by using focus-based methods that iteratively adjust the camera's focal length to maximize sharpness of the object image (e.g., high frequency spectral coefficients of image transform).

In one embodiment, the apparatus 100 has multiple cameras, and uses stereoscopic ranging to determine the distance between the camera and the object. Alternatively, a time-of-flight sensor can be used to determine the distance between the camera and the object.

When an object is viewed off-axis, object size can be calculated by mathematically rotating the object model in space to provide on-axis dimensions.

Different wall or flooring colors or textures in the vicinity of an object can help identify an object as well as any duplicates in the environmental space. Similarly, the proximity of the object to other objects allows the apparatus 100 to differentiate between it as well as other similar objects elsewhere in the environment.

When objects are moved, the apparatus 100 adapts accordingly. For example, the detection algorithm may be immune to small changes in object location while reacting to the presence of a new object or absence of a previous object. In such embodiments, the apparatus 100 queries the user as to whether an object has been added, removed or relocated elsewhere in the environmental space.

In one embodiment. the apparatus 100 is connected to the same Wi-Fi network as the object(s) it controls. A combination of one or more features can be used to identify the local Wi-Fi network, such as, for example, Service Set Identifier (SSID), media access control address (MAC address) and MESH_ID and will provide a good indication of Wi-Fi connected objects. The Wi-Fi signal strength can also provide a useful indication of the object to the access point.

Table 1 shows examples of exemplary useful attributes for a television:

**Table 1**

| **Attribute** | **Example Values** |
|---|---|
| shape | rectangle, trapezoid |
| height | 10 cm |
| width | 25 cm |
| aspect ratio | 2.5:1 |
| compass orientation | 0 degrees (north) |
| logo | RCA, SONY, none |
| buttons and knobs | 6 |
| stand | pedestal, legs, none |
| distance from floor | 55 cm |
| distance to nearest object | 3 cm |
| self-illumination | power LED, display screen, lamp, none |
| object color | black |
| wall color | white |
| flooring color | gray |
| flooring texture | smooth, woodgrain, tile, carpet |
| local Wi-Fi networks | ATT859-EXT |

Thereafter, referring to step 250 of FIG. 2, a user control application is accessed based on the determined at least one contextual attribute for the candidate objects.

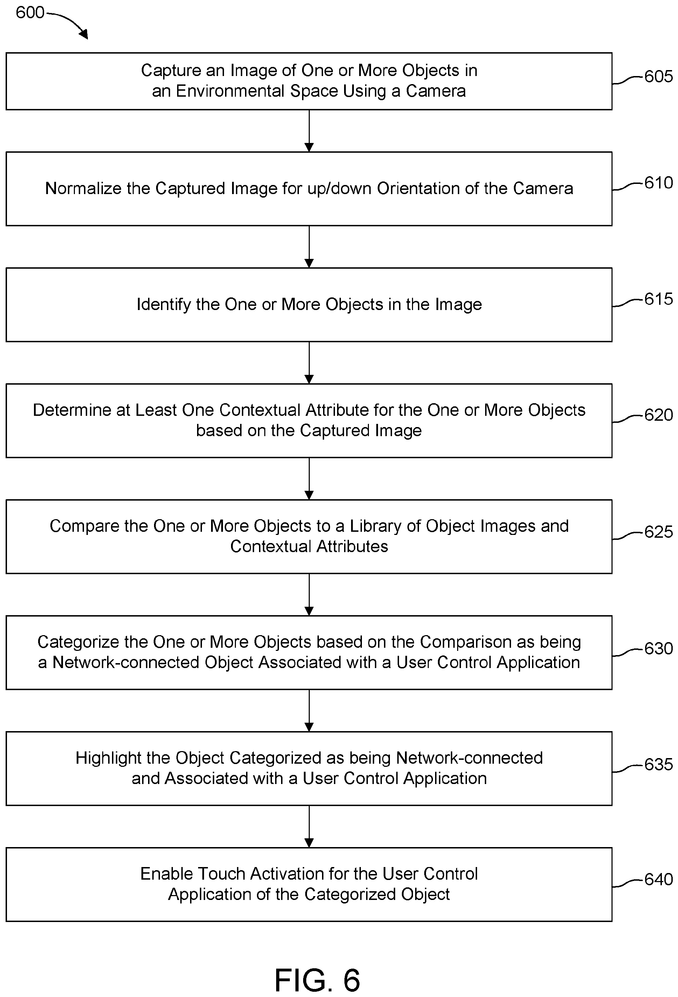

Referring to FIG. 6, ab alternative method 600 for content aware recognition for IoT control of objects in an environmental space in connection with the present disclosure is shown.

In an exemplary implementation, described below, the method is carried out by the apparatus 100 (e.g., smartphone or tablet). In an alternative implementation, the method is carried out by a processor external to the apparatus 100. In the latter case, the results from the processor are provided to the apparatus 100.

Still referring to FIG. 6, in step 605, when an IoT control application is active, an image of one or more objects in an environmental space is captured using a camera. In step 610, the captured image is normalized for up/down orientation of the camera as discussed above with reference to step 220 of FIG. 2.

At steps 615 and 620, one or more candidate IoT objects are identified within the normalized image and at least one contextual attribute is determined for each of the candidate objects identified.

At step 625, once at least one contextual attribute is identified for each normalized object image, a comparison with a library of object images and contextual attributes is performed. The comparison of the normalized images against a reference library may be performed using both image objects as well as extracted contextual and non-contextual attributes. The comparison of the normalized images with the reference library of object images and contextual attributes provides better correlation for the identification of IoT objects.

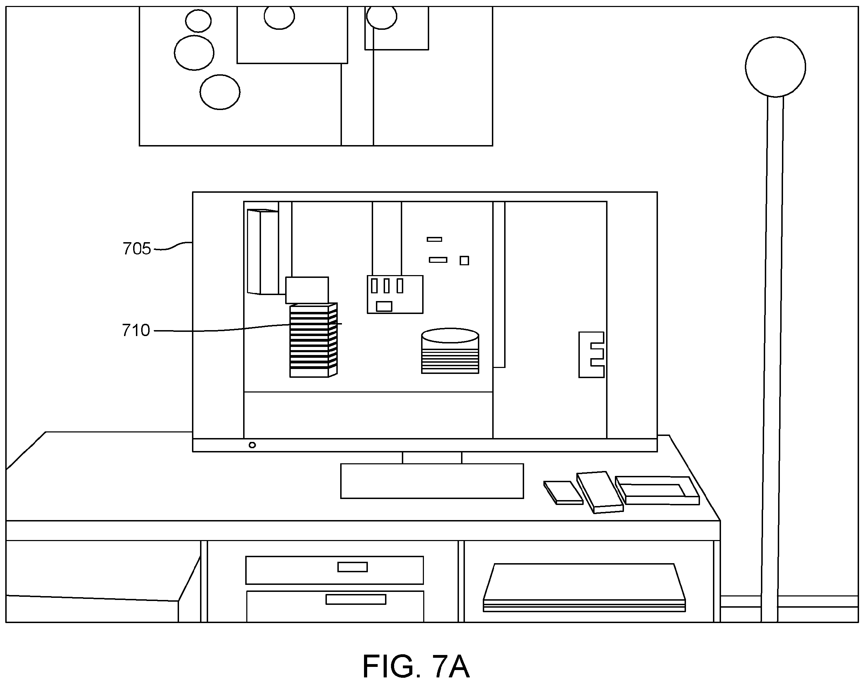

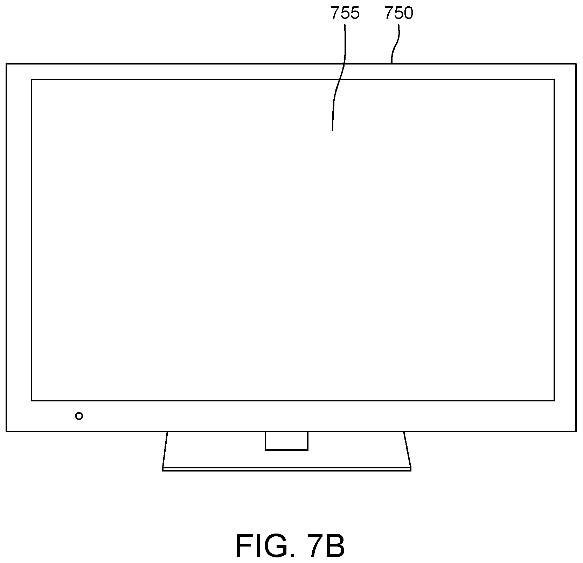

Referring to FIG. 7A, when the object is a television 705, a large percentage of the captured image is an active screen area 710. The active screen area 710 is illuminated with variable content and correlation against a library of images considers the active screen area when determining contextual attributes. In one exemplary embodiment, shown in FIG. 7B, content on the active screen area 755 of the library model 750 is ignored for correlation purposes. In another exemplary embodiment, the illumination of the television active screen as well as motion thereon can be considered as contextual attributes that can be used to improve correlation against a library of images.

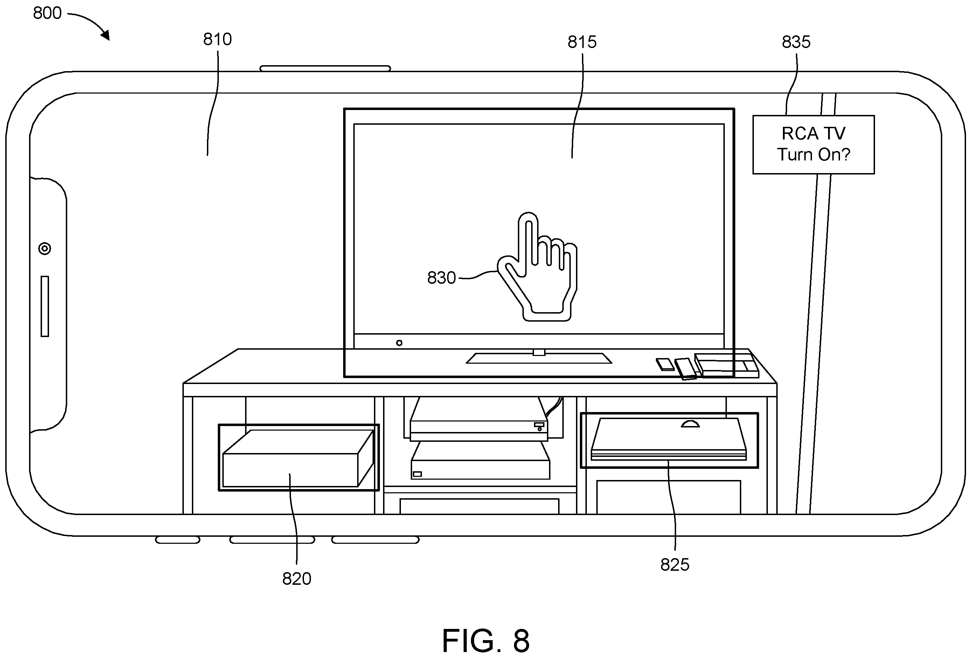

Still referring to FIG. 6, at step 630 the one or more objects may be categorized, based on the comparison, as being a network-connected object associated with a user control application. At step 635, when the network-connected object is categorized as being associated with a user control application, such object is highlighted on the touchscreen of the apparatus 800 (see FIG. 8, which shows several network-connected objects 815, 820, 825 highlighted on the touchscreen 810 of the apparatus 800).

At step 640, touch activation for the user control application is activated by selecting one of the highlighted objects. For example, in FIG. 8, the television is selected by touching the screen within the area of the highlighted television image 815 on the touchscreen 810. The hand icon 830 indicates that a user can touch the touchscreen anywhere within the area of the highlighted television 815. The selection enables a user control pop up window 835 facilitating user control of the television.

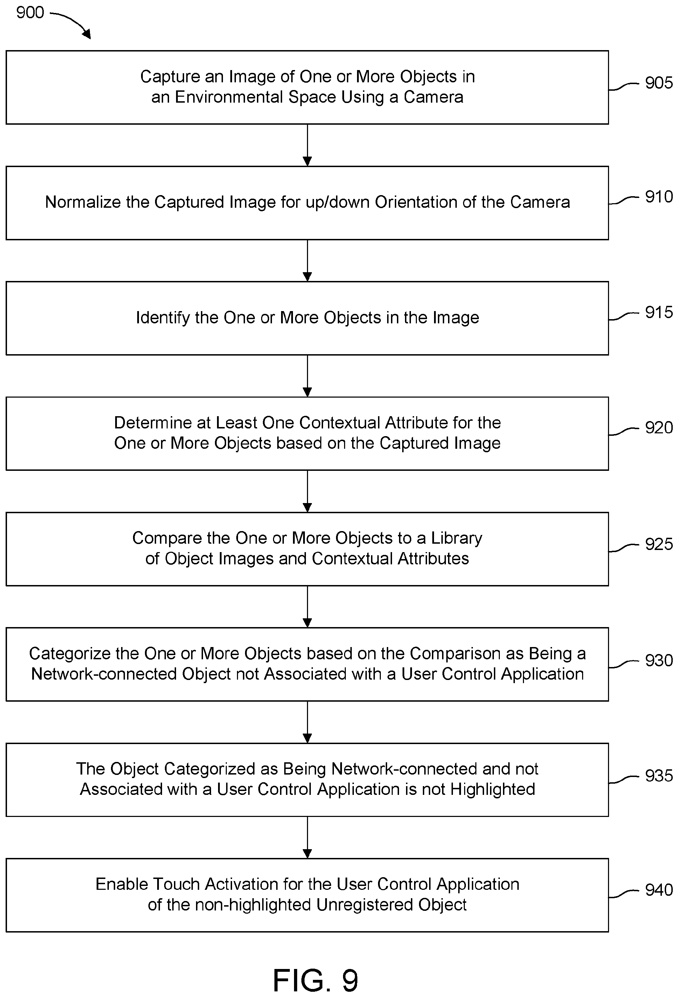

FIG. 9 is a flowchart of another proposed method 900 for content aware recognition for IoT control of objects in an environmental space. In an exemplary implementation, described below, the method is carried out by the apparatus 100 (e.g., smartphone or tablet). In an alternative exemplary implementation, the method is carried out by a processor external to the apparatus 100. In the latter case, the results from the processor are provided to the apparatus 100.

In step 905, when an IoT control application is active, an image of one or more objects in an environmental space is captured using a camera. Referring to step 910, the captured image is normalized for up/down orientation of the camera as discussed above with reference to step 220 of FIG. 2. At steps 915 and 920, one or more candidate IoT objects are identified within the normalized image and at least one contextual attribute is determined for each of the candidate objects identified.

At step 925 of FIG. 9, once at least one contextual attribute is identified for each normalized object image, a comparison with a library of object images and contextual attributes is performed. The comparison of the normalized images against a reference library may be performed using both image objects as well as extracted contextual and non-contextual attributes. The comparison of the normalized images with the reference library of object images and contextual attributes provides better correlation for the identification of IoT objects.

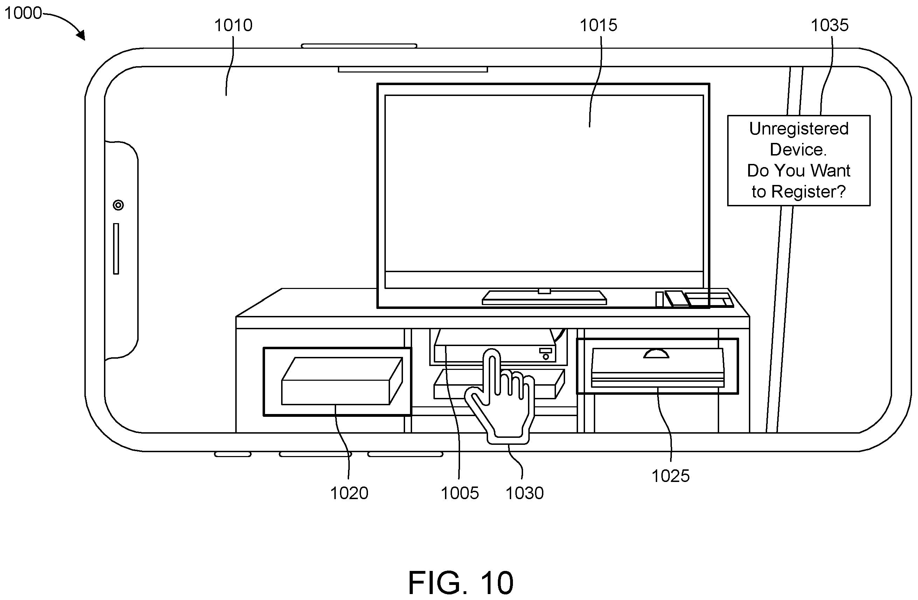

At step 930 of FIG. 9, the one or more objects may be categorized, based on the comparison, as being a network-connected object not associated with a user control application. At step 935, if the network-connected object is categorized as not being associated with a user control application, such object is not highlighted on the touchscreen of the apparatus (see FIG. 10, which shows a network-connected object 1005 not highlighted and several network-connected objects 1015, 1020, 1025 highlighted on the touchscreen 1010 of the apparatus 1000).

At step 940, touch activation for the user control application may be activated by selecting non-highlighted unregistered objects. The non-highlighted status provides an indication that the device is unregistered and may, for example, invite the user to register a user control application for such device or not show again. For example, in FIG. 10, the non-highlighted unregistered object 1005 is selected by touching the screen within the area of the non-highlighted object image 1005 on the touchscreen 1010. The hand icon 1030 indicates that a user can touch the touchscreen anywhere within the area of the non-highlighted object image 1005. The selection enables a user control pop up window 1035 facilitating user control access for object 1005.

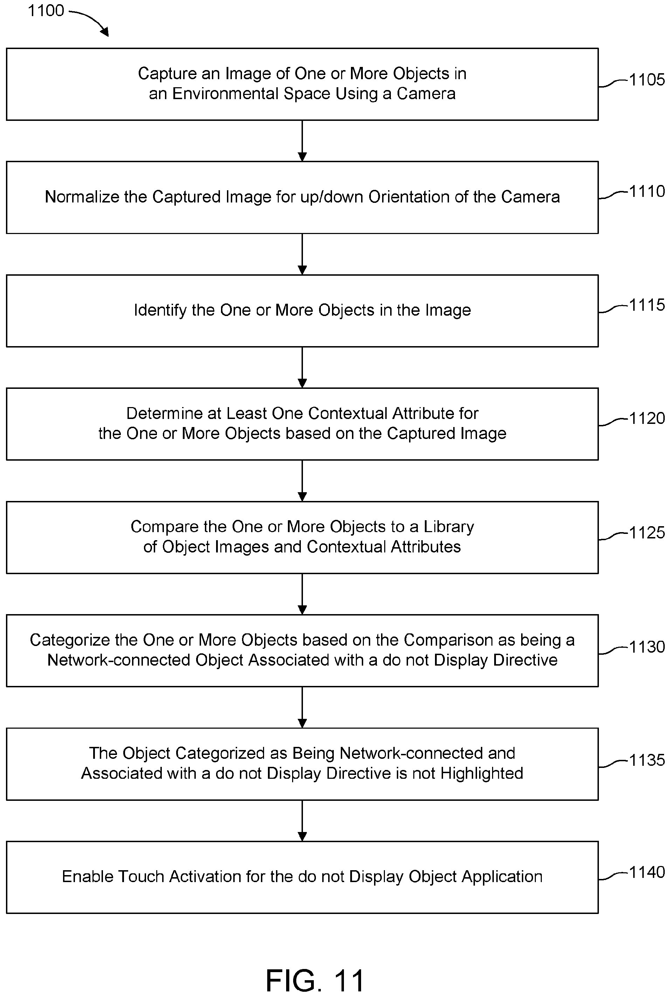

FIG. 11 is a flowchart of another proposed method 1100 for content aware recognition for IoT control of objects in an environmental space. In an exemplary implementation, described below, the method is carried out by the apparatus 100 (e.g., smartphone or tablet). In an alternative exemplary implementation, the method is carried out by a processor external to the apparatus 100. In the latter case, the results from the processor are provided to the apparatus 100.

In step 1105, when an IoT control application is active, an image of one or more objects in an environmental space is captured using a camera. Referring to step 1110, the captured image is normalized for up/down orientation of the camera as discussed above with reference to step 220 of FIG. 2. At steps 1115 and 1120, one or more candidate IoT objects are identified within the normalized image and at least one contextual attribute is determined for each of the candidate objects identified.

At step 1125 of FIG. 11, once at least one contextual attribute is identified for each normalized object image, a comparison with a library of object images and contextual attributes is performed. The comparison of the normalized images against a reference library may be performed using both image objects as well as extracted contextual and non-contextual attributes. The comparison of the normalized images with the reference library of object images and contextual attributes provides better correlation for the identification of IoT objects.

At step 1130 of FIG. 11, the one or more objects may be categorized, based on the comparison, as being a network-connected object associated with a do not display directive. At step 1135, when the network-connected object is categorized as being associated with a do not display directive, such object is not highlighted on the touchscreen of the apparatus.

At step 1140, touch activation for the user control application can be activated by selecting the non-highlighted object associated with a do not display directive. The non-highlighted status provides an indication that the device has a do not display directive and may, for example, invite the user to undo that status so as to display the object.

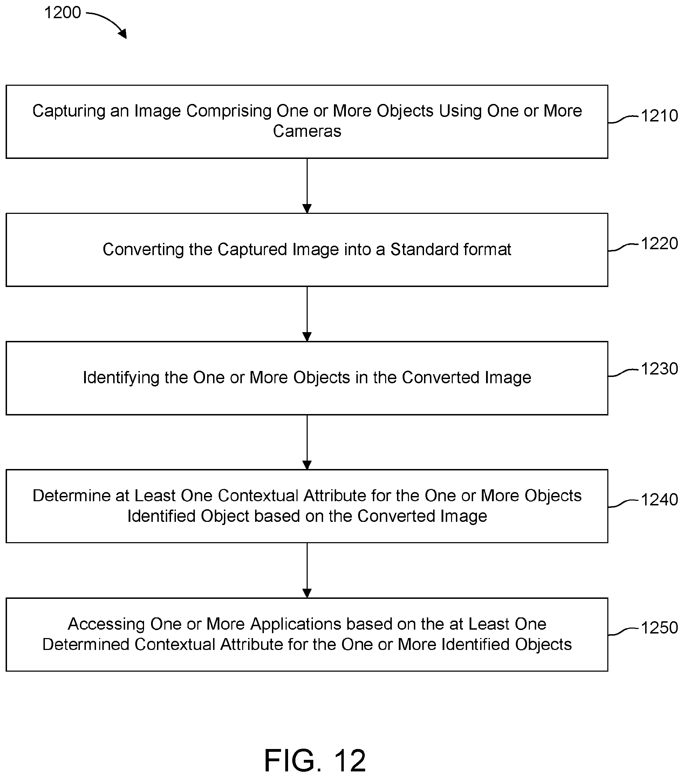

FIG. 12 is a flowchart of another proposed method 1200 for content aware recognition for IoT control of objects in an environmental space. In an exemplary implementation, described below, the method may be carried out by the apparatus 100 (e.g., smartphone or tablet). In an alternative exemplary implementation, the method may be carried out by a processor external to the apparatus 100. In the latter case, the results from the processor may be provided to the apparatus 100.

The method 1200 may comprise a first of capturing 1210 an image comprising one or more objects using one or more cameras. The method 1200 may further comprise a step of converting 1220 the captured image into a standard format. The conversion into a standard format may comprise a step of normalizing the captured image for up/down orientation of the one or more cameras. More particularly, the step of normalizing the captured image for up/down orientation may consist of performing up/down off-axis normalization of the captured image. The method 1200 may further comprise a step of identifying 1230 the one or more objects in the converted image into a standard format.

The method 1200 may further comprise a step of determining 1240 at least one contextual attribute for the one or more identified objects based on the converted image. The at least one determined contextual attribute may be any one of compass orientation of the one or more identified objects, visual characteristics of the one or more identified objects, visual characteristics of a wall or a floor, proximity of the one or more identified objects to other objects, and internet addresses and signal strengths of access points.

The method 1200 may further comprise a step wherein the WTRU may access 1250 one or more applications based on the at least one determined contextual attribute for the one or more identified objects.

Although the present embodiments have been described hereinabove with reference to specific embodiments, the present disclosure is not limited to the specific embodiments, and modifications will be apparent to a skilled person in the art which lie within the scope of the claims.

Many further modifications and variations will suggest themselves to those versed in the art upon making reference to the foregoing illustrative embodiments, which are given by way of example only and which are not intended to limit the scope of the invention, that being determined solely by the appended claims. In particular, the different features from different embodiments may be interchanged where appropriate.

## Claims

1. A method, implemented in a wireless transmit/receive unit, WTRU, the method comprising:
capturing an image comprising one or more objects using one or more cameras;
normalizing the captured image;
identifying the one or more objects in the normalized image;
determining at least one contextual attribute for the one or more objects based on the captured image;
comparing the identified one or more objects to a library of object images and contextual attributes; and
based on comparing the identified one or more objects to a library of object images and contextual attributes, categorizing each of the identified one or more objects as a network connected object to be either a highlighted object or non-highlighted object.

2. The method of claim 1, wherein normalizing the captured image comprises normalizing the captured image for up/down orientation of the one or more cameras.

3. The method of claim 2, wherein normalizing the captured image for up/down
orientation comprises performing up/down off-axis normalization of the captured image.

4. The method according to any one of the preceding claims, wherein the at least one
determined contextual attribute is any one of compass orientation of the identified one or more objects, visual characteristics of a wall or a floor, proximity of the identified one or more objects to other objects, and internet addresses and signal strengths of access points.

5. The method according to any one of the preceding claims, wherein the identified one or more objects categorized as a network connected object to be the highlighted object are
associated with one or more user control applications.

6. The method of claim 5, further comprising:
enabling touch activation on a screen of a display of the highlighted object for the one or more user control applications.

7. A wireless transmit/receive unit, WTRU comprising a processor, a transmitter, a receiver and memory, configured to:
capture an image comprising one or more objects using one or more cameras;
normalize the captured image;
identify the one or more objects in the normalized image;
determine at least one contextual attribute for the one or more objects based on the captured image;
compare the identified one or more objects to a library of object images and contextual attributes; and
based on comparing the identified one or more objects to a library of object images and contextual attributes, categorize each of the identified one or more objects as a network connected object to be either a highlighted object or non-highlighted object.

8. The WTRU of claim 7, wherein normalizing the captured image comprises normalizing the captured image for up/down orientation of the one or more cameras.

9. The method of claim 8, wherein normalizing the captured image for up/down
orientation comprises performing up/down off-axis normalization of the captured image.

10. The WTRU according to any of claims 7 to claim 9, wherein the at least one
determined contextual attribute is any one of compass orientation of the identified one or more objects, visual characteristics of a wall or a floor, proximity of the identified one or more objects to other objects, and internet addresses and signal strengths of access points.

11. The WTRU according to any of claims 7 to claim 10, wherein the identified one or more objects categorized as a network connected object to be the highlighted object are associated with one or more user control applications.

12. The WTRU of claim 11, further configured to:
enable touch activation on a screen of a display of the highlighted object for the one or more user control applications.
